Europäisches Patentamt

European Patent Office

Office européen des brevets

(11) Publication number: **0 044 195**
**B1**

# (12) EUROPEAN PATENT SPECIFICATION

(45) Date of publication of patent specification: **13.11.85**

(51) Int. Cl.⁴: **H 01 J 61/30, H 01 J 61/56**

(21) Application number: **81303115.0**

(22) Date of filing: **08.07.81**

(54) Compact fluorescent lamp arrangement.

(30) Priority: **11.07.80 JP 94723/80**

(43) Date of publication of application:
**20.01.82 Bulletin 82/03**

(45) Publication of the grant of the patent:
**13.11.85 Bulletin 85/46**

(84) Designated Contracting States:
**DE FR GB IT NL**

(56) References cited:
**EP-A-0 000 966**
**EP-A-0 026 428**
**DE-C- 839 975**
**GB-A-2 003 314**
**GB-A-2 014 356**
**GB-A-2 033 653**
**US-A-3 070 767**
**US-A-3 953 761**
**US-A-4 005 330**

(73) Proprietor: **Kabushiki Kaisha Toshiba
72, Horikawa-cho Saiwai-ku
Kawasaki-shi Kanagawa-ken 210 (JP)**

(72) Inventor: **Osada, Kimio
Patent Division 72, Horikawa-cho Saiwai-ku
Kawasaki-shi Kanagawa-ken (JP)**

(74) Representative: **Kirk, Geoffrey Thomas et al
BATCHELLOR, KIRK & EYLES 2 Pear Tree Court
Farringdon Road
London EC1R 0DS (GB)**

Courier Press, Leamington Spa, England.

## Description

This invention relates to a compact fluorescent lamp arrangement.

Fluorescent lamps have been used as a source of illumination for many years. A fluorescent lamp has a high lighting efficiency and a low consumption of electric power in comparison with an incandescent lamp and, therefore, a compact fluorescent lamp provided with an incandescent lamp base, i.e. an E 26-type screw cap lamp base, has been developed to enable a fluorescent lamp to be used from an incandescent lamp fitting. In order to interchange an incandescent lamp with such a compact fluorescent lamp, it is necessary for the fluorescent lamp to have a folded envelope because, in order to obtain about the same brightness as with an incandescent lamp, it is necessary for the fluorescent lamp's envelope to have a certain minimum length. Such a compact fluorescent lamp is known, for example, from U.S. Patent No. 3953761.

An embodiment of the invention disclosed in this prior art statement patent specification has a housing separated from a screw cap lamp base by an annular collar, a ballast contained within the housing and a fluorescent lamp arranged in a helix, around the housing. It is also indicated that an outer glass envelope can be fitted to the collar to enclose the housing and the fluorescent lamp.

According to the present invention, a compact fluorescent lamp arrangement comprises a lamp base; an envelope at least part of which is of light transmitting material; a ballast supported on a member in the envelope; and a folded fluorescent lamp located around the ballast and supported on the member, characterised in that the member is part of a chassis over which a base portion of the envelope is fitted, that a globe member of light transmitting material is attached to the base portion to enclose the lamp and the ballast and in that the lamp base is attached to a part of the chassis which is outside the envelope.

In this construction, the lamp base is attached to the chassis member and the outer envelope does not have to carry the folded lamp and the ballast.

A more complete appreciation of this invention, and many of the attendant advantages thereof, will be readily obtained as the same becomes better understood by reference to the following detailed description when considered in connection with the accompanying drawings herein.

Figure 1 is a longitudinal cross-sectional view of a compact fluorescent lamp arrangement of this invention;

Figure 2 is a view taken on line II—II of Figure 1;

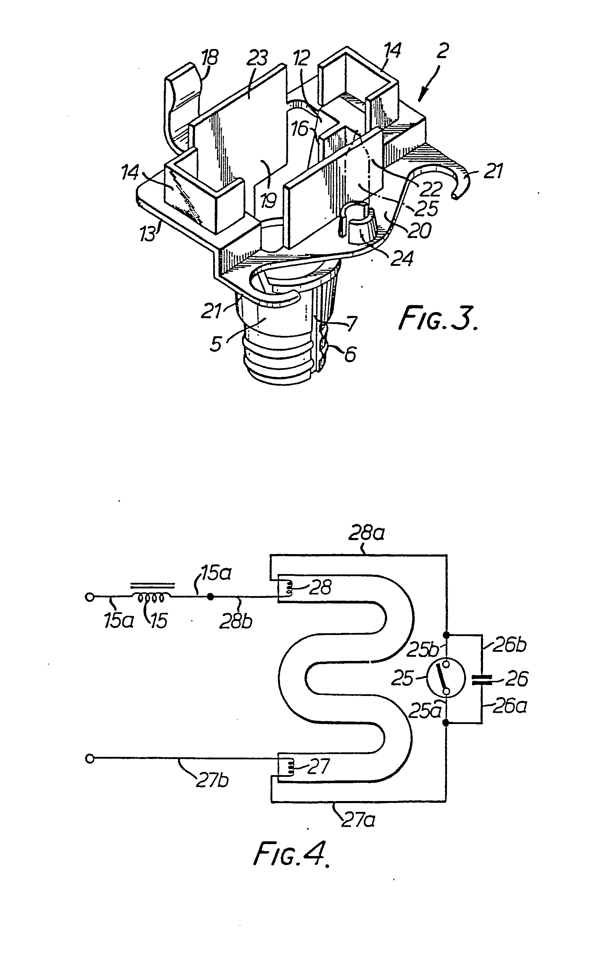

Figure 3 is a perspective view of a chassis of a compact fluorescent lamp arrangement of this invention; and

Figure 4 is a schematic diagram of an electric circuit embodying this invention.

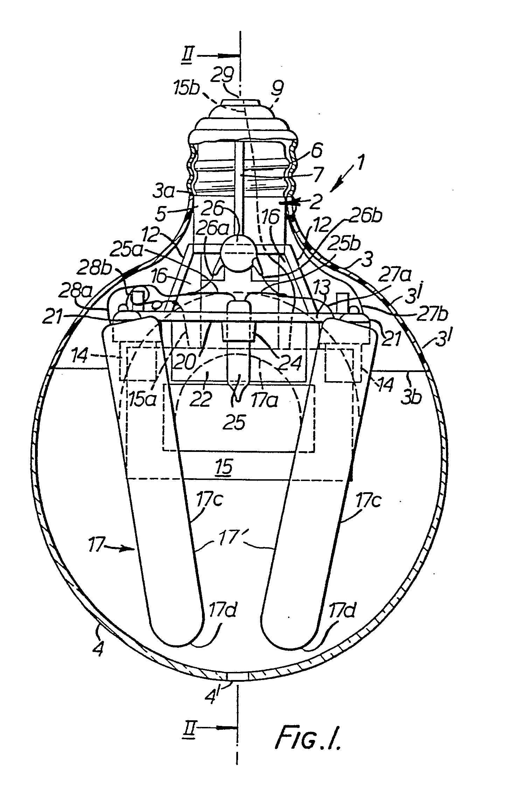

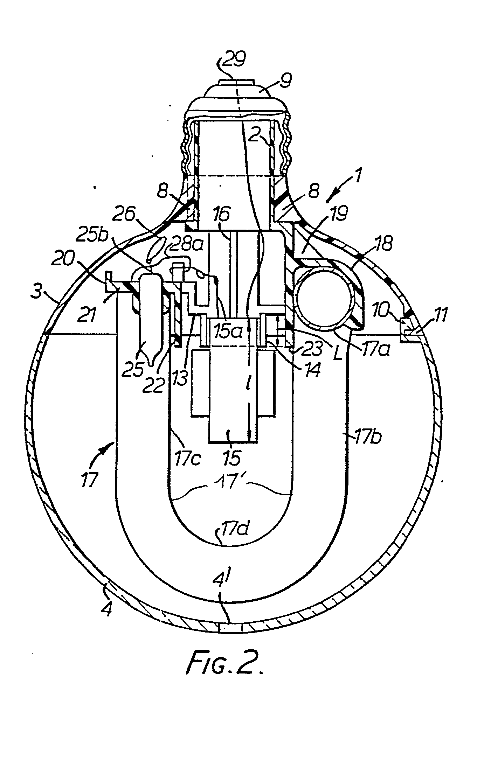

Referring now to the drawings, wherein like reference numerals designate identical or corresponding parts through the several views, and more particularly to Figure 1 and Figure 2 thereof, a compact fluorescent lamp arrangement 1 has a chassis member 2, a base member 3 and a non-opaque globe member 4, as shown. The chassis 2 is made of heat proof plastics material, such as polycarbonate resin, and includes a cylindrical part 5 at one end thereof. The cylindrical part 5 is partially formed with a screw thread 6 on the outside thereof. Moreover, the cylindrical part 5 is formed with opposing longitudinal recesses 7 along the outer surface thereof and the outer end of each recess 7 is open. The hemispherical shaped base member 3 has a small opening 3a at one end and a larger opening 3b at the other end. The inside surface around the opening 3a is provided with opposing projection parts 8 and the attachment of the cylindrical part 5 to the base member 3 is accomplished by positioning the projections 8 of the base member 3 in the recesses 7 of the chassis member 2. A screw cap lamp base 9, as used for incandescent lamps (i.e. E-26 type base), is fitted by screwing it to the screw part 6 of the cylindrical part 5 of the chassis member. The base member 3 is provided with a plurality of openings 3' adjacent the peripheral opening 3b. The base member 3 is secured to the bowl shaped globe member 4 around the opening 3b. The globe member is made of plastics material (i.e. polycarbonate or other light transmitting material) and coloured, for example, white. Moreover, the globe member 4 has a plurality of openings 4' formed in it near the top thereof to allow air to flow therethrough. The connection of the base member 3 and the globe member 4 is achieved by cooperating hook portions 11 and 10 provided respectively at the peripheries of the base member 3 and the globe member 4.

Two arm parts 12 are formed at one end of the cylindrical part 5 of the chassis member 2. A rectangular holding member 13 is mounted on the arm part 12. A pair of opposed channel-shaped fixing wall members 14 are respectively mounted on the holding member 13 so as to face each other. Between these wall members 14, the top of a ballast 15 is positioned and is fixed with its lead wires 15a, 15b directed to the base member 3. The height (L) of the fixing walls 14 is about 20 to 25 per cent of the height (I) of the ballast 15. A rib 16 is provided on each of the arm parts 12, not only to reinforce the arm parts 12 but also to provide a stop face for the top of the ballast 15.

A fluorescent lamp 17 having a folded envelope 17' is mounted on the holding member 13 so as to surround the ballast 15. The envelope 17' is formed by bending a straight glass tube into a U-shape to form a first bent part 17a and a pair of first leg parts 17b, followed by the further bending of each of the pair of leg parts 17b into second U-shapes to form second leg parts 17c and two pairs of second bent parts 17d. The thus formed envelope 17' is of a small and compact shape which may be referred to as a saddle shaped envelope.

The holding member 13 of the chassis member 2 provides a hook-arm member 18, carried by a spreader plate 19, to hold the first bent part 17a of the envelope 17' and a holder plate 20 having curved parts 21 to hold the opposite ends of the envelope 17'. The first bent part 17a of the envelope 17' is retained between the hook arm member 18 and the spreader plate 19. The holder plate 20 is formed like a flange having the curved pieces 21 at opposite ends thereof. The chassis member 2 carries a large heat shield plate 22 which is mounted on the holder plate 20 and a small heat shield plate 23 mounted on the spreader plate 19. Consequently, heat from the ballast 15, when it is in use is shielded from the first bent part 17a and both ends of the envelope by the large and small heat shield plates 22 and 23. The holder plate 20 is provided near its centre with a holder 24 for holding a glow starter 25. Lead wires 25a and 25b of the glow starter 25 are connected to the lead wires 26a and 26b of a capacitor 26 by twisting the corresponding wires together, and these wires are respectively connected, by welding, to lead wires 27a and 28a of electrodes 27 and 28 at the ends of the envelope 17'. Other lead wires 27b and 28b are respectively connected to the side terminal of screw base 9 and to the lead wire 15a of the ballast 15. The lead wire 15b of the ballast 15 is connected to an end terminal 29 of the screw base 9 by welding.

The inner surface of the winding envelope 17' is coated with phosphor and a predetermined amount of mercury and inert gases are sealed in the envelope 17'.

In such a fluorescent lamp, the chassis member 2 consists of the cylindrical part 5 and the holder member 13. The screw cap lamp base is fitted on the part 5. Consequently, since the relatively heavy ballast 15 (approximately two thirds of the lamp weight) and the envelope 17' are mounted on the holder member 13, the weight of these elements is wholly supported by the chassis member 2 and the base member 3 is not required to support the weight of these elements. Thus, it is not necessary to design the base member 3 to be so strong as would otherwise be necessary because the mechanical structure of the base member 3 is subjected only to a torsion moment when attaching to a socket.

Since the heat shield plates 22 and 23 are positioned between the ballast 15 and the bent part 17a and the end of the envelope 17', the radiant heat from the ballast 15 is prevented from impinging directly upon the bent part 17a and the ends of the envelope 17'. The first bent part 17a of the envelope 17' in particular is kept at a relatively low temperature (i.e. from 50 to 53°C). Thus, the mercury vapour pressure within the envelope 17' is maintained low because the mercury vapour condenses at the first bent part 17a and the portions near thereto. This condensation of mercury vapour limits the mercury vapour density during the operation of the lamp, so that the overall mercury vapour pressure is kept at an optimal low value (0.665 to 0.8 Pa, i.e. 5 to 6 × $10^{-3}$ mm Hg). The lighting efficiency of the fluorescent lamp is thus prevented from being reduced.

The base member 3 and the globe member 4 respectively have openings 3' and 4' so that air, heated in the base member 3 and the globe member 4, is circulated through the openings 3' and 4'. Consequently, the envelope 17' is cooled by outside air flowing through these openings 3' and 4', so that mercury vapour pressure in the envelope 17' may be kept at the optimal value.

Moreover, with regard to the fixing of the ballast 15, the top part thereof is fixed by the fixing wall members 14, and the ratio of the height of the fixing wall members 14 to the height of the ballast 15 is about from 20 to 25 per cent. Consequently, the lamp shows good resistance not only to the radiant effect of the ballast but also to external oscillations which might otherwise disturb the ballast.

**Claims**

1. A compact fluorescent lamp arrangement comprising a lamp base (9); an envelope (3, 4) at least part of which is of light transmitting material; a ballast (15) supported on a member in the envelope; and a folded fluorescent lamp (17) located around the ballast and supported on the member, characterised in that the member is part of a chassis (2) over which a base portion (3) of the envelope is fitted, that a globe member (4) of light transmitting material is attached to the base portion to enclose the lamp and the ballast and in that lamp base (9) is attached to a part of the chassis which is outside the envelope.

2. A compact fluorescent lamp arrangement as claimed in claim 1, characterised in that the chassis member (2) has a cylindrical portion (5) to the exterior part of which the lamp base (9) is attached, and a holder portion (13) to which the lamp and the ballast are attached.

3. A compact fluorescent lamp arrangement as claimed in claim 2, characterised in that the cylindrical portion has an exterior thread (6) on which a screw cap lamp base is fitted.

4. A compact fluorescent lamp arrangement as claimed in any preceding claim, characterised in that the lamp envelope is folded to provide a first U-shaped bent part (17a) and a pair of first leg parts (17b), and each of the first leg parts is bent into a U-shape to form a pair of second bent parts (17d) and two pairs of second leg parts (17c).

5. A compact fluorescent lamp arrangement as claimed in claim 4, characterised in that said chassis member further comprises a hook arm member (18) for holding said first bent part of said envelope (17'), fixing wall members (14) for supporting said ballast, small and large heat shield plates (22, 23) positioned between said ballast and the ends of the said envelope for preventing the radiant heat of said ballast from impinging upon said envelope, and a holder plate (20) for holding said ends of said envelope.

6. A compact fluorescent lamp arrangement as claimed in claim 2, characterised in that said holder plate includes a holder (24) for holding a glow starter.

7. A compact fluorescent lamp arrangement as claimed in any preceding claim, characterised in that said portion of light transmitting material has a plurality of openings (4') therein.

8. A compact fluorescent lamp arrangement as claimed in any preceding claim, characterised in that the shape of said envelope (3, 4) is substantially spherical.

## Revendications

1. Lampe fluorescente compacte qui comprend un culot de lampe (9), une enveloppe (3, 4) dont une partie, au moins, est faite d'une matière transparente à la lumière, une résistance-ballast (15) supportée sur un organe dans l'enveloppe et une lampe fluorescente pliée (17) disposée autour du ballast et supportée sur l'organe, caractérisée en ce que ledit organe est une partie d'un châssis (2) au dessus duquel est montée la partie de base (3) de l'enveloppe, en ce qu'un globe (4) fait d'une matière transparente est fixé à cette partie de base, afin d'enfermer la lampe et la résistance-ballast et en ce que le culot (9) de la lampe est fixé à une partie du châssis qui est à l'extérieur de l'enveloppe.

2. Lampe fluorescente compacte selon la revendication 1, caractérisée en ce que le châssis (2) a une partie cylindrique (5) à la surface extérieure de laquelle est fixé le culot (9), ainsi qu'une partie de support (13) à laquelle sont fixés la lampe et le ballast.

3. Lampe fluorescente compacte selon la revendication 2, caractérisée en ce que la partie cylindrique présente un filetage extérieur (6) sur lequel est monté un culot de lampe à vis.

4. Lampe fluorescente compacte selon l'une quelconque des revendications précédentes, caractérisée en ce que l'enveloppe de la lampe est pliée pour produire une première partie coudée en U (17a) et deux premières branches (17b) et en ce que chacune de ces premières branches est pliée en U de manière à former une paire de secondes parties pliées (17d) et deux paires de secondes branches (17c).

5. Lampe fluorescent compacte selon la revendication 4 caractérisée en ce que ledit châssis comprend, en outre, un crochet (18) pour tenir ladite première partie pliée de ladite enveloppe (17'), des parois de fixation (14) pour supporter ledit ballast, une petite et une grande plaques de protection thermique (22, 23) interposées entre ledit ballast et les extrémités de ladite enveloppe, afin d'empêcher la chaleur rayonnée par ledit ballast, de frapper ladite enveloppe et une plaque de support (20) pour tenir lesdites extrémités de ladite enveloppe.

6. Lampe fluorescente compacte selon la revendication 2 caractérisée en ce que ladite plaque de support comporte une monture (24) pour tenir un starter à luminescence.

7. Lampe fluorescente compacte selon l'une quelconque des revendications précédentes caractérisé en ce que ladite partie en matière transparente est percée de plusieurs ouvertures (4').

8. Lampe fluorescente compacte selon l'une quelconque des revendications précédentes caractérisé en ce que la forme de ladite enveloppe (3, 4) est sensiblement sphérique.

## Patentansprüche

1. Kompakte Fluoreszenzlampenanordnung, mit einer Lampenbasis (9), einer Umhüllung (3, 4), von der wenigstens ein Teil aus lichtübertragendem Material besteht, einem Ballast (15), der auf einem Glied in der Umhüllung gehalten ist, und mit einer gefalteten Fluoreszenzlampe (17), die rund um den Ballast angeordnet und auf dem Glied gehalten ist, dadurch gekennzeichnet, daß das Glied Teil eines Chassis (2) ist, das von einem Basisteil (3) der Umhüllung übergriffen ist, daß ein Kugelteil (4) aus lichtübertragendem Material an dem Basisteil befestigt ist, um die Lampe und den Ballast zu umschließen, und daß die Lampenbasis (9) an einem Teil des Chassis befestigt ist, der sich außerhalb der Umhüllung befindet.

2. Fluoreszenzlampenanordnung nach Anspruch 1, dadurch gekennzeichnet, daß das Chassisteil (2) aufweist einen zylindrischen Teil (5), an dessen äußeren Teil die Lampenbasis (9) befestigt ist, und einen Halteteil (13), an dem die Lampe und der Ballast befestigt sind.

3. Fluoreszenzlampenanordnung nach Anspruch 2, dadurch gekennzeichnet, daß der zylindrische Teil ein Außengewinde (16) aufweist, auf dem eine schraubkappenförmige Lampenbasis sitzt.

4. Fluoreszenzlampenanordnung nach einem der vorhergehenden Ansprüche, dadurch gekennzeichnet, daß die Umhüllung der Lampe so gefaltet oder gebogen ist, daß sie einen ersten U-förmigen gebogenen Teil (17a) und ein Paar von ersten Schenkelteilen (17b) bildet, und daß jedes der ersten Schenkelteile in eine U-Form gebogen sind, um ein Paar von zweiten gebogenen Teilen (17d) und zwei Paare von zweiten Schenkelteilen (17c) zu bilden.

5. Fluoreszenzlampenanordnung nach Anspruch 4, dadurch gekennzeichnet, daß das genannte Chassisteil weiterhin aufweist ein hakenförmiges Teil (18) zum Halten des genannten ersten gebogenen Teils der Umhüllung (17), Befestigungswandteile (19) zum Halten des Ballasts, kleine und große Wärmeabschirmungsplatten (22, 23), die zwischen dem Ballast und den Enden der genannten Umhüllung angeordnet sind, um Strahlungswärme des genannten Ballasts von der genannten Umhüllung fernzuhalten, und eine Halteplatte (20) zum Halten der Enden der genannten Umhüllung.

6. Fluoreszenzlampenanordnung nach Anspruch 2, dadurch gekennzeichnet, daß die genannte Halteplatte einen Halter (24) zum Halten eines Glühstarters aufweist.

7. Fluoreszenzlampenanordnung nach einem der vorhergehenden Ansprüche, dadurch gekennzeichnet, daß der genannte Teil des lichtübertragenden Teils mehrere Öffnungen (4') darin aufweist.

8. Fluoreszenzlampenanordnung nach einem der vorhergehenden Ansprüche, dadurch gekennzeichnet, daß die Form der Umhüllung (3, 4) im wesentlichen kugelförmig ist.

FIG.I.

FIG.2.

2

FIG.3.

FIG.4.